# EUROPEAN PATENT APPLICATION

(11) **EP 4 722 572 A1**
(43) Date of publication of application: **08.04.2026**
(21) Application number: 24814999.9
(22) Date of filing: 12.04.2024
(51) Int. Cl.: F16K 31/68, F01P 7/16

(54) **THERMOSTAT DEVICE**

(30) Priority: 26.05.2023 JP 2023086929
(71) Applicant: Nippon Thermostat Co., Ltd., Kiyose-shi Tokyo 204-0003 (JP)
(72) Inventor: NISHIMURA, Tetsuya, Kiyose-shi, Tokyo 204-0003 (JP); WATANABE,Toshihiro, Kiyose-shi, Tokyo 204-0003 (JP)
(74) Representative: Hoffmann Eitle
(86) International application number: PCT/JP2024/014860
(87) International publication number: WO 2024/247512

(57) **Abstract**

Provided is a thermostat device capable of improving the flow of cooling water and temperature sensing performance. A thermostat device 1 according to the present invention includes: a thermo-operation unit 2 for controlling the flow of cooling water being supplied to an engine through a first passage which passes through a radiator; and a relief mechanism unit 3 for controlling the flow of the cooling water being supplied to the engine through a second passage which does not pass through the radiator. The thermo-operation unit 2 has a thermo-element 6 having a built-in thermal expansion body which expands and contracts in response to the temperature of the cooling water. The thermostat device 1 includes a mounting plate 5 for providing a gap of a fixed interval between the thermo-element 6 and the relief mechanism unit 3. The thermo-operation unit 2 and the relief mechanism unit 3 have separate structures, respectively, and are integrated when mounted by using the mounting plate 5.

## Description

### Technical Field

The present invention relates to a thermostat device that controls the temperature of coolant, which is disposed in a flow passage through which the coolant is circulated between an internal combustion engine (hereinafter referred to as engine) and the radiator of an automobile.

### Background Art

A thermostat device is provided with a thermo-element incorporating a thermal expansion body (wax) expanding and contracting by sensing a temperature change in the coolant flowing through a flow passage between the engine and the radiator and functions to maintain the coolant at a predetermined temperature by opening and closing a control valve (valve body) by the advancing and retracting action of a piston rod accompanied by expansion and contraction of the thermal expansion body.

Specifically, a thermo-operating unit that includes a thermo-element incorporating a thermal expansion body, a control valve, and a piston rod is accommodated within a frame as housing and is disposed on the coolant inlet side of the engine, for example. The control valve closes when the coolant temperature is lower than a predetermined temperature. This allows the coolant to circulate without passing through (detouring) the radiator. Conversely, when the coolant temperature exceeds the predetermined temperature, the control valve opens, overcoming the biasing force of a coil spring. This allows the coolant to circulate through the radiator (the cooling passage), which controls the temperature of the coolant passing through the engine to a desired state. (See patent literature 1 and 2 below.)

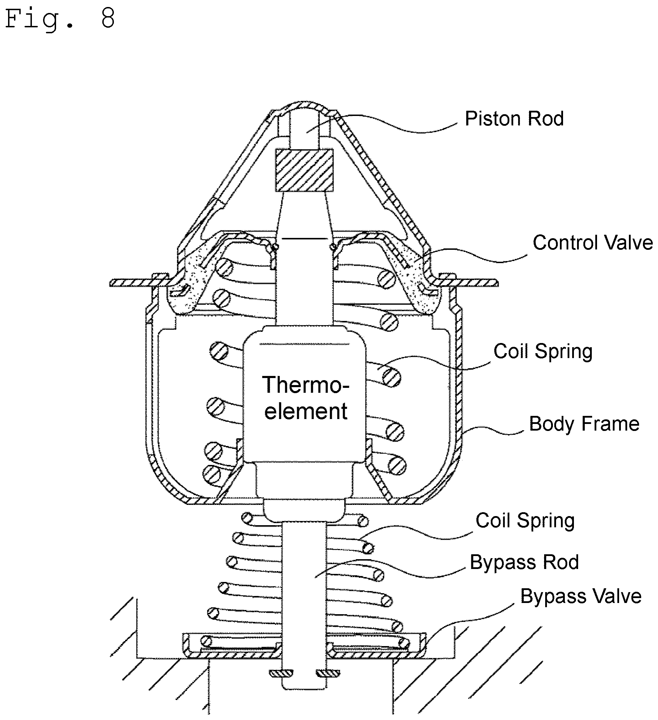

As described in the patent literature 1 and 2 below, this type of thermostat device is provided with a valve body with a conical or planar shape (a first valve body, a second valve body), for example, on both sides of the thermo-element (see Fig. 8).

The first valve body functions as a control valve that controls the coolant flow from the radiator to the engine, and the second valve body functions as a bypass valve that controls the coolant flow from a bypass passage to the engine. In addition, the control valve in the thermo-operating unit appropriately opens or closes the fluid passage in response to the advancing and retracting action of the piston rod, which is accompanied by the expansion or contraction of the thermal expansion body according to the coolant temperature.

A bypass valve is inserted and fitted at the tip end of the bypass rod. It is elastically retained in a biased state by a coil spring and functions as a pressure valve to release fluid pressure, for example. The bypass valve appropriately opens and closes the fluid passage linked with the axial direction movement of the bypass rod, which is caused by the fluid pressure. This type of bypass valve functions as a flow-adjustment valve, ensuring the flow rate from the radiator by shutting off the bypass passage when the thermostat is activated, and also as a normally-closed relief valve.

### Citation List

### Patent Literature

PTL 1: JA-A-2013-137070
PTL 2: JA-A-2013-241918

### Summary of Invention

### Technical Problem

In each of the thermostat devices mentioned in the above patent literature, particularly when the bypass valve functions as a relief valve, coolant flow is hindered, resulting in pressure loss since the bypass rod and coil spring (which open and close the bypass valve) are both located near the thermo-element.

In the thermostat devices recited in the patent literature above, the coolant cannot contact the bottom surface of the thermo-element because the bypass rod is attached to the lower end portion of the thermo-element. In other words, because the contact area is smaller than when the entire circumference of the thermo-element is in contact with the coolant, there is room for modification in the viewpoint of the improvement of temperature sensitivity.

The present invention is made in consideration of the above problem and aims to provide a thermostat device that improves the coolant flow and temperature sensitivity.

### Solution to Problem

The thermostat device according to the present invention includes a thermo-operating unit with a control valve that opens and closes a first passage, according to the coolant temperature, which is a passage for coolant that returns to an engine passing through a radiator; and
a relief mechanism unit with a relief valve that opens and closes a second passage, according to the coolant pressure, which is a passage for coolant that returns to the engine without passing through the radiator,
wherein
the thermo-operating unit includes a thermo-element with a thermal expanding body therein that expands and contracts in response to the coolant temperature, and
a fitting member is included to provide a constant-distance gap between the thermo-element of the thermo-operating unit and the relief mechanism unit, and
the thermo-operating unit and the relief mechanism unit have distinct structures, respectively, and are joined and integrated by the fitting member.

The thermostat device of the present invention improves the coolant flow around the thermo-element compared to conventional devices, which have a relief rod and coil spring around the thermo-element. Additionally, the configuration described above improves the coolant flow around the thermo-element and ensures efficient contact with the thermo-element, thereby improving temperature sensitivity.

In the thermostat device of the present invention, the thermo-operating unit further includes a piston rod that extends and retracts with the expansion and contraction of the thermal expansion body and a frame provided with a cylindrical part into which the end part of the thermo-element can be slidably inserted; when the piston rod protrudes due to the thermal expansion of the thermal expansion body while the control valve is biased in the valve-closing direction, the thermo-element slides on the inner wall of the cylindrical portion and moves to the direction to open the control valve attached to the thermo-element; in the relief mechanism unit, a relief valve is attached to one end side of the relief rod as a valve stem and opens and closes according to the coolant pressure; and the fitting member is formed as a U-shaped plate, with both ends of the U-shaped plate attached to the frame providing the constant-distance gap, and the other end of the relief rod is fixed to the outer bottom surface of the U-shaped plate.

The thermostat device according to the present invention may be provided with a body frame to house the thermo-operating unit. In this case, the fitting member is provided with two openings through which the coolant passes through cylindrical side walls and has a structure that, while in a state of being mounted to the frame, the thermo-element is slidably supported by the inner wall of the cylindrical portion;
the thermo-operating unit further includes a piston rod that extends and retracts with the expansion and contraction of the thermal expansion body; when the piston rod protrudes due to the thermal expansion of the thermal expansion body while the control valve is biased in the valve-closing direction, the thermo-element slides feely on an inner wall of the cylindrical part and moves to the direction to open the control valve attached to the thermo-element; and in the relief mechanism unit, a relief valve is attached to one end side of the relief rod as a valve stem so as to open and close according to the coolant pressure, and the other end of the relief rod is secured to an inner surface of a side wall of the fitting member creating a constant-distance gap against the thermo-element. In this case, the other end of the relief may be fixed on the inside side wall of the fitting member by a biasing force due to an elastic member or welding.

The thermostat device according to the present invention may be provided with a body frame that accommodates the thermo-operating unit. In this case, the fitting member is provided with an opening through which the coolant passes between facing cylindrical side walls, and the two side walls are connected by an annular joining part with a stepwise reduced diameter while in a state of being mounted to the frame, the thermo-element is slidably supported by the inner wall of the cylindrical tip end that is formed at the center of the annular joining part;
the thermo-operating unit further includes a piston rod that extends and retracts with the expansion and contraction of the thermal expansion body; when the piston rod protrudes due to the thermal expansion of the thermal expansion body while the control valve is biased in the valve-closing direction, the thermo-element slides on the inner wall of the tip end of the fitting member and moves to the direction to open the control valve attached to the thermo-element; and
in the relief mechanism unit, a relief valve is attached to one end side of the relief rod as a valve stem so as to open and close according to the coolant pressure, and the other end of the relief rod is secured to the inner side wall of the fitting member with a constant-distance gap against the thermo-element In this case, the other end of the relief may be fixed on the inside side wall of the fitting member by a biasing force due to an elastic member or welding.

In the thermostat device according to the present invention, the axial line of the relief mechanism unit may extend along the same line as the axial line of the thermo-operating unit. Alternatively, it may deviate from or incline against the axial line of the thermo-operating unit.

### Advantageous Effects of Invention

The thermostat device according to the present invention can improve the flow and the temperature sensitivity of the coolant.

### Brief Description of Drawings

[Figure 1] Fig. 1 is a view illustrating an example of a cooling circuit including the thermostat device according to the present invention.
[Figure 2] Fig. 2 is a view illustrating an example of a configuration of a first embodiment of the thermostat device.
[Figure 3] Fig. 3 is a developed schematic view of the first embodiment of the thermostat device.
[Figure 4-1] Fig. 4-1 is a view illustrating an example of a configuration of a second embodiment of the thermostat device.
[Figure 4-2] Fig. 4-2 is a view illustrating an example of a configuration of a second embodiment of the thermostat device.
[Figure 5] Fig. 5 is a perspective view of an example of the structure of a fitting member.
[Figure 6-1] Fig. 6-1 is a view illustrating an example of a configuration of a third embodiment of the thermostat device.
[Figure 6-2] Fig. 6-2 is a view illustrating an example of a configuration of the third embodiment of the thermostat device.
   [Figure 6-3] Fig. 6-3 is a view illustrating an example of a configuration of the third embodiment of the thermostat device.
[Figure 7] Fig. 7 is a perspective view of an example of the structure of a fitting member.
[Figure 8] Fig. 8 is a view illustrating a configuration of a conventional thermostat device.

### Description of Embodiments

A thermostat device according to the present invention will be described in detail with reference to the drawings. It should be noted that the scope of this invention is not limited to the examples described herein. Duplicate descriptions of elements that can be described in the same way may be omitted by using the same reference signs.

### A First Embodiment

A thermostat device of a first embodiment will be described in detail with reference to the drawings.

### Cooling Circuit

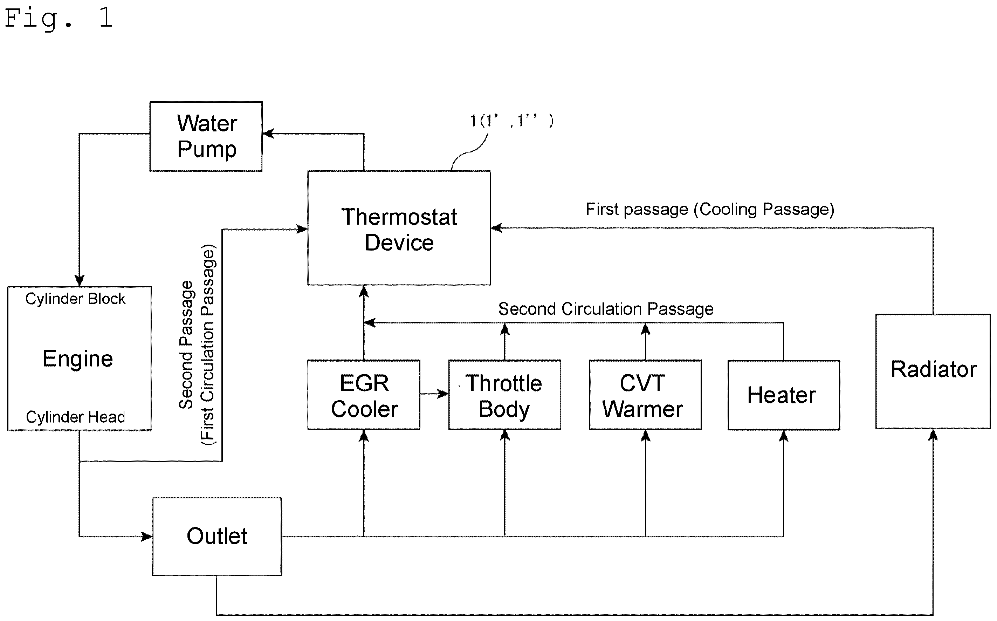

Fig. 1 is a view illustrating an example of a cooling circuit including the thermostat device according to the first embodiment. The thermostat device 1 of this embodiment is intended for use in a cooling circuit of an automobile which includes a first flow passage that is a cooling passage through which the coolant out-flown from the engine (cylider head side) returns to the engine (cylidner block side) via the radiator, and a second flow passage, which corresponds to a first circulation passage to be described later, through which the coolant out-flown from the engine (cylider head sid) returns to the engine (cylidner block side) without passing through the radiator (detouring).

Specifically, for example, when the coolant temperature is higher than the predetermined temperature, the valve (the valve body in the thermostat device 1), which opens and closes the cooling passage shown in Fig. 1, is opened.
The coolant circulates through the cooling passage from the engine and returns to the engine by being pressurized by the water pump, after passing through the outlet, radiator, and the thermostat device 1. (See Fig. 1.)

When the coolant pressure suddenly rises in the water chamber of the engine, the valve (the valve body in the thermostat device 1), which opens and closes the first cooling passage shown in Fig. 1, is opened. The coolant circulates through a first circulation passage, in which the coolant flows from the engine through the thermostat device 1 without passing through the radiator, and returns to the engine after being pressurized by the water pump. (See Fig. 1.) The valve, which opens and closes the first circulation passage, is for pressure relief; it functions as a safety valve that opens to allow the coolant to flow when the coolant pressure of the engine side rises and prevents the coolant pressure from rising excessively.

Fig. 1 shows the coolant flow passage. The coolant passes through the thermostat device 1 from the engine after passing through the outlet, EGR cooler, throttle body, CVT warmer, heater, and other devices, and returns to the engine after being pressurized by the water pump. This is the second circulation path shown in Fig. 1, through which coolant circulates as appropriate according to the operating status of the various devices.

### Thermostat Device

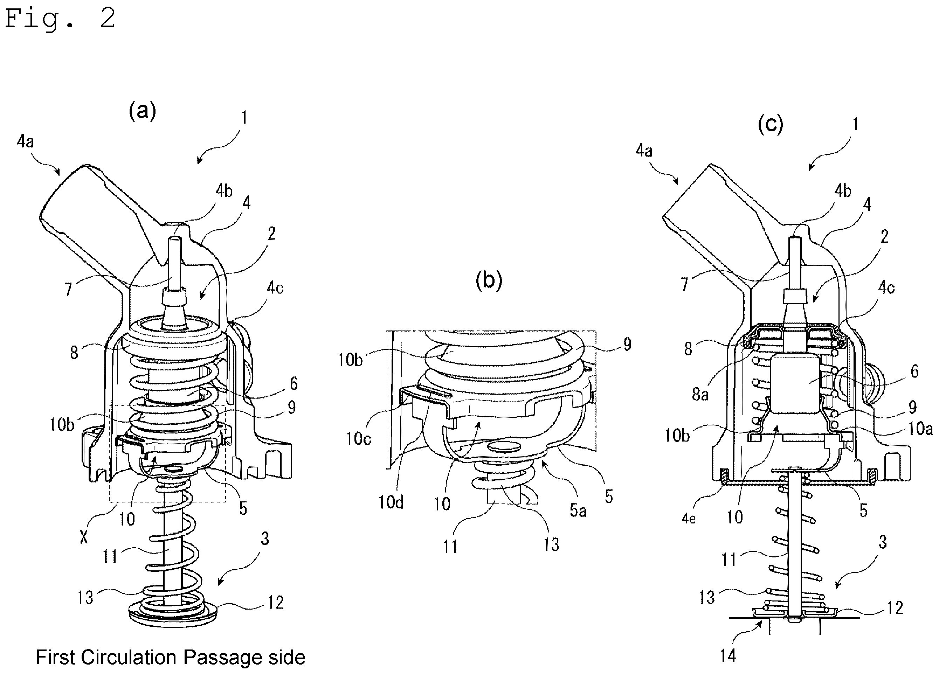

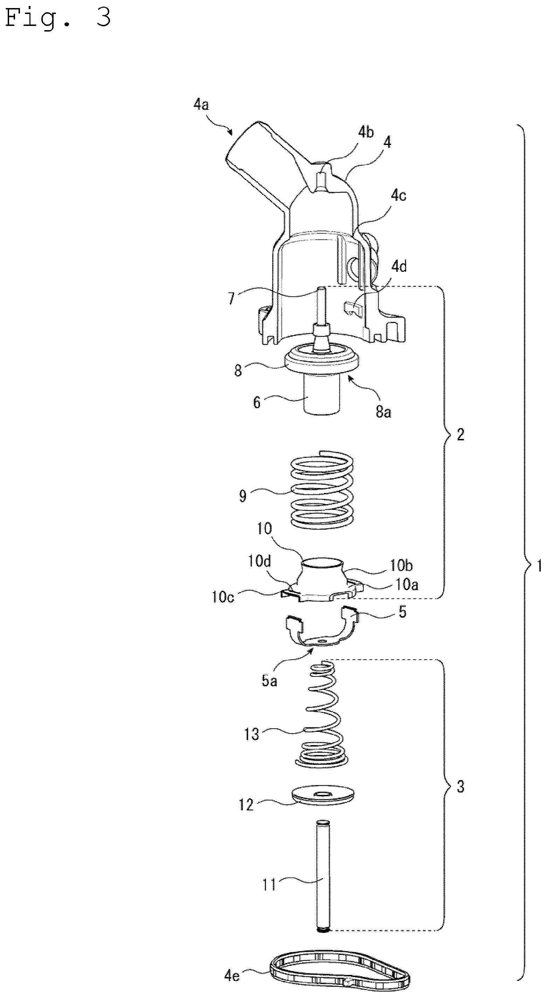

Fig. 2 illustrates an example of a configuration of a first embodiment of the thermostat device. Fig. 2(a) is a partial cutaway perspective view of the housing thereof, Fig. 2(b) is an enlarged view of the portion indicated by X, and Fig. 2(c) is a cross-sectional view thereof. Fig. 3 is a developed schematic view of the first embodiment of the thermostat device.

The thermostat device 1 of this embodiment is arranged in the flow passage to circulate the coolant between the engine and the radiator (see the cooling circuit shown in Fig. 1). The thermostat device 1 includes a thermo-operating unit 2 that controls the coolant flow supplied to the engine passing through the cooling passage described above and a relief mechanism unit 3 that controls the coolant flow supplied to the engine passing through the first circulation passage described above. The thermostat device 1 is constituted by accommodating a thermo-operating unit 2 in a housing 4 and attaching the relief mechanism unit 3 to one end in the longitudinal direction of the thermo-operating unit 2 by way of a fitting member 5 of this embodiment, as will be described later. (See Fig. 2.) In other words, the thermo-operating unit 2 and the relief mechanism unit 3 are separate body structures that are integrated using the fitting members 5 to form the thermostat device 1.

### Structure of Thermo-Operating Unit Side

The central area of the housing 4 includes an approximately cylindrical inner space in which a coolant passage is formed, and the thermo-operating unit 2 is also incorporated. The housing 4 includes the flow inlet 4a for taking the coolant in from the radiator.

The thermo-operating unit 2 is provided with a cylindrical thermo-element 6, which incorporates a thermal expansion body (wax) that expands or contracts in response to the coolant temperature, and it operates such that the piston rod 7 extends and retracts in the longitudinal direction of the thermo-operating unit 2 due to the expansion and contraction of the thermal expansion body. As shown in Fig. 2, the tip end of the piston rod 7 is inserted into the piston receiving hole 4b, which is formed on the upper central portion of housing 4.

A bevel-shaped control valve 8 (valve body) is attached to the thermo-element 6, and the control valve 8 is in a closed state by abutting the valve seat 4c, which is formed in the inner space of the housing 4. A coil spring 9 is disposed to surround the circumference of the thermo-element 6, with one end in contact with the first spring receiving part 8a, which is formed in the recessed portion of the bevel-shaped control valve 8. The other end of the coil spring 9 is supported by the frame 10 that forms one end of the thermo-operating unit 2.

The frame 10 of the thermo-operating unit 2 is equipped with a tapered cylinder portion 10b surrounded by the coil spring 9 at the center of the disk-shaped second spring receiving part 10a, which supports the other end of the coil spring 9. At the tip end of the cylinder portion 10b, the end portion of the thermo-element 6, having approximately the same shape as the tip end thereof, is inserted; the thermo-element 6 slides in the axial direction in the cylinder portion 10b in response to the extension and retraction movement of the piston rod 7. Four hooking parts 10c for rotation prevention are provided equally spaced around the periphery of the second spring receiving part 10a, which are formed using the bending-drawing method, for example. These hooking parts 10c are mounted to hook onto the frame support 4d equipped on the inner wall of the housing 4. With this, the thermo-operating unit 2 is incorporated in the inner space of the housing 4. The control valve 8 is biased in the valve-closing direction by the coil spring 9. A ring-shaped seal member 4e is attached to the bottom of the housing 4.

In the thermo-operating unit 2 configured as described above, when the piston rod 7 protrudes due to the thermal expansion of the thermal expansion body, the thermo-element 6 and the control valve 8 move downward against the biasing force of the coil spring 9, bringing the control valve 8 to the valve-opening state. This causes the thermo-operating unit 2 to circulate the coolant from the radiator side to the engine side.

### Structure of the Relief Mechanism Unit Side

Next, the configuration of the relief mechanism unit 3 and the fitting member 5 of this embodiment will be described.

In Figs. 2 and 3, the thermostat device 1 of this embodiment is provided with a U-shaped fitting plate (hereinafter referred to as the fitting plate 5), which serves as a fitting member 5 that enables the relief mechanism unit 3 to attach to the thermo-element 6 of the thermo-operating unit 2 with a constant-distance gap. The fitting plate 5 is joined by caulking, for example, after both ends of the U shape thereof are inserted into the through holes 10d formed on the two non-adjacent hooking parts 10c among the four hooking parts provided on the frame 10, thereby forming an opening with a U-shape through which the coolant can pass. The fastening method of the fitting plate 5 to the frame 10 is not limited to caulking; any method is applicable as long as it is firmly secured.

A flat portion 5a is provided on the outer bottom surface of the U-shaped fitting plate 5, which is formed with a perpendicular plane against the axial direction of the thermo-operating unit 2, for example. One end of the relief rod 11 (the opposite end of the first circulation passage side end shown in Fig. 2) serving as a valve stem is secured on the flat portion 5a. The method of fitting the relief rod 11 to the flat portion 5a may be caulking or another fitting method.

The axial line of the relief rod 11 (the axis of the relief mechanism unit 3) can be on the extended axial line of the thermo-operating unit 2 or deviated from the axial line of the thermo-operating unit 2 as long as it remains within the flat portion 5a.

As described above, the flat portion 5a is provided on the outer bottom surface of the U-shaped fitting plate 5, but not limited to this; the outer surface of the U-shape may also be formed of a curved surface. Consequently, the relief rod 11 (the relief mechanism unit 3) may be tilted against the axial line of the thermo-operating unit 2, depending on the fitting position of the fitting plate 5.

On the other side of the relief rod 11, a relief valve 12, which is an approximately plate-like valve, is fitted and assembled, and locked with such as an E-type retaining ring. The relief valve 12 is elastically supported by being biased toward the valve seat 14 side, which is a member of a counterpart side housing, by the coil spring 13. The coil spring 13 is disposed between the flat portion 5a and the relief valve 12 so as to surround the circumference of the relief rod 11. The member of the counterpart side housing is a counterpart member to which the thermostat device 1 is attached and is the one that integrally constitutes a flow passage together with the housing 4.

As configured above, the relief mechanism unit 3 constitutes a first circulation passage which the relief valve 12 opens and closes. In this embodiment, the relief valve 12 seats on the valve seat 14 by the biasing force of the coil spring 13. The relief valve 12 opens and closes depending on the coolant pressure on the first circulation passage side.

### Effects

The integration of the relief mechanism 3 and the thermo-operating unit 2 through the fitting plate 5 allows a creation of a gap with a constant distance between the thermo-element 6 of the thermo-operation unit 2 and the relief rod 11 of the relief mechanism unit 3 and the one between the thermo-element 6 of the thermo-operation unit 2 and the coil spring 13 in the thermostat device 1 of this embodiment. This makes it possible to improve the coolant flow around the thermo-element 6, in contrast to the conventional design where the relief rod and coil spring are disposed around the thermo-element. With the structure described above, the temperature-sensitivity improves because of the improved coolant flow around the thermo-element 6 and the efficient contact of the thermo-element 6 with the coolant. Taking into account the pressure loss of the coolant and the temperature-sensitivity of the thermo-element 6, the larger the gap provided by the fitting plate 5, the more desirable it is.

Furthermore, configuring the thermo-operating unit 2 and the relief mechanism unit 3 as separate structures and providing a flat portion 5a formed on the fitting plate 5 in a plane perpendicular to the axis direction of the thermo-operating unit 2, makes it possible to easily disalign the axis of the relief valve 12 (relief mechanism unit 3) relative to the axis of the thermo-operating unit 2. In addition, forming the outer bottom surface of the U-shaped portion of the fitting plate 5 into a curved surface allows the relief rod 11 (relief mechanism unit 3) to easily tilt relative to the axis of the thermo-operated unit 2, depending on its mounting position on the fitting plate 5.

In this embodiment of the thermostat device 1, the housing 4 that accommodates the thermo-operating unit 2 is made of a resin material, for example. However, the material used is not limited to this.

The shape and structure of the thermostat device 1 of this embodiment are not limited to those described above. Depending on the device specifications and the usage environment, the shapes and structures of each part can be appropriately deformed and modified.

This embodiment describes an example in which the thermostat device 1 is incorporated into the coolant inlet side of the engine in the cooling circuit, as shown in Fig. 1. However, this is not the only option. A similar effect can be achieved by incorporating the thermostat device 1 into the coolant outlet side of the engine.

### Second Embodiment

Next, a second embodiment of the thermostat device will be described in detail with reference to the drawings. Note that the embodiment does not limit the invention. Elements that can be described similarly to the first embodiment will have the same reference signs, and a duplicate description will be omitted. Moreover, the configuration of the cooling circuit shown in Fig. 1 can be explained by replacing thermostat device 1 with thermostat device 1' for the second embodiment.

### Thermostat Device

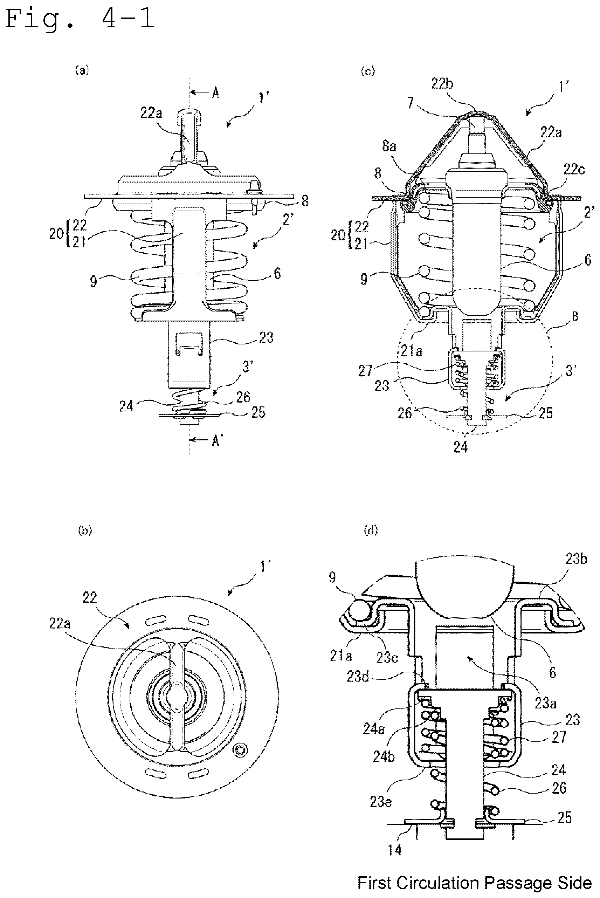

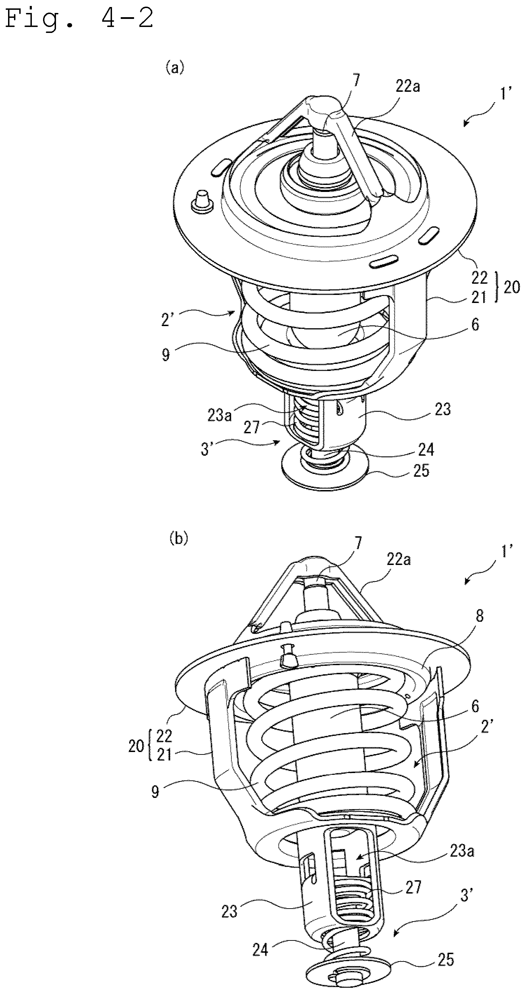

Fig. 4(Fig. 4-1 and Fig. 4-2) are views illustrating an example configuration of a thermostat device of a second embodiment. Fig. 4-1(a) is a front view, Fig. 4-1(b) is a plan view, Fig. 4-1(c) is an A-A' cross-sectional view, Fig. 4-1(d) is an enlarged view of section B, and Figs. 4-2(a) and 4-2(b) are perspective views.

The thermostat device 1' in this embodiment, similar to the first embodiment described above, is disposed in the flow passage for the circulation of the coolant between the engine and the radiator (see the cooling circuit shown in Fig. 1) is provided with a thermo-operating unit 2' which controls the coolant flow supplied to the engine through the cooling passage, a relief mechanism unit 3' which controls the coolant flow supplied to the engine through the first circulation passage. The thermostat device 1' is configured that the thermo-operating unit 2' is accommodated in an outer frame 20 which consists of a frame 21 and a flange 22 and additionally, the relief mechanism unit 3' is mounted on one end side of the longitudinal direction of the thermo-operating unit 2' via a fitting member 23 (see Fig. 4). In other words, the thermo-operation unit 2' and the relief mechanism unit 3' are separate structures that are integrated into the thermostat device 1' via the fitting structure in the fitting member 23.

### Structure of the Thermo-operating Unit Side

The frame 21 is formed so as to surround the circumference of the thermo-operating unit 2' in the outer frame 20. The flange 22, which has a piston locking part 22a with a bridge structure protruding at a predetermined inclination, is connected to the end of the coolant passage side in the frame 21.

Similar to the first embodiment, the thermo-operating unit 2' is provided with a cylindrical thermo-element 6, which contains a thermal expansion body (wax) that expands and contracts in response to the coolant temperature, and the piston rod 7 extends and retracts in the longitudinal direction of the thermo-element 6 due to the expansion and contraction of the thermal expansion body. The tip end of the piston rod 7 is inserted into the piston receiving hole 22b formed on the piston locking part 22a of the flange 22.

A bevel-shaped control valve (valve body) 8 is attached to the thermo-element 6, and the control valve 8 is in a closed state by abutting the valve seat 22c, which is formed in the inner space of the flange 22. A coil spring 9 is disposed to surround the circumference of the thermo-element 6, with one end thereof in contact with the first spring receiving part 8a formed in the recessed portion of the bevel-shaped control valve 8. The other end of the coil spring 9 is supported by the annularly formed second spring receiving part 21a at the end (lower end of the frame 21) of the coolant outlet side of the frame 21. Specifically, the second spring receiving part 21a formed in the frame 21 includes an annularly formed hook-shaped concave part in which the end of the coil spring 9 (corresponding to the other end of the coil spring 9) is mounted. With this, the thermo-operating unit 2' is incorporated in the outer frame 20. Thus, the control valve 8 is biased by the coil spring 9 in the valve-closing direction.

In the thermo-operating unit 2' configured as described above, the thermo-element 6 and control valve 8 move against the biasing force of the coil spring 9 when the piston rod 7 protrudes due to thermal expansion of the thermal expansion body, causing the control valve 8 to be opened. As a result, the thermo-operating unit 2' allows coolant from the radiator side to flow to the engine side.

### Structure of the Relief Mechanism Unit Side

Next, the structure of the relief mechanism unit 3' and the fitting member 23 of this embodiment will be described.

In Fig. 4, the thermostat device 1' of this embodiment includes
a fitting member 23 with two openings 23a through which cooling water can flow; the openings are formed in a side wall of a roughly cylindrical shape, as a fitting member capable of mounting a relief mechanism unit 3' at a predetermined interval from a thermo-element 6 forming the longitudinal end of a thermo-operating unit 2'. Furthermore, the mounting member 23 is configured so that when the piston rod 7 of the thermo-operated unit 2' protrudes due to the thermal expansion of the thermal expansion body, the thermo-element 6 moves downward in conjunction with this and is supported slidably by the inner wall of the cylindrical portion (other than the opening 23a).

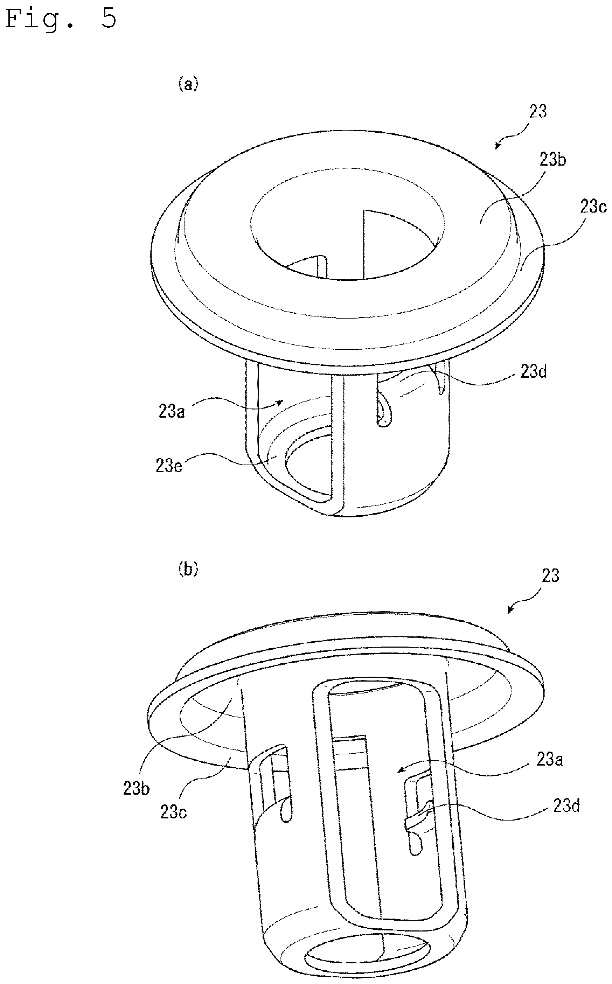

Figs. 5(a) and 5(b) are perspective views illustrating an example of the structure of the fitting member 23. One end of the cylindrical portion of the fitting member 23 has an annular brim 23b formed toward the outside, and a hooking part 23c is formed at the outer peripheral end of the brim 23b, which is mountable so as to hang down from the second spring receiving part 21a formed in the frame 21 described above. A flange-shaped locking part 23d, which is formed of a plane perpendicular to the axial direction of the thermo-operating unit 2', is formed near the central area of the inner wall of the cylindrical portion of the fitting member 23. Furthermore, a third spring receiving part 23e, which is formed of a plane perpendicular to the axial direction of the thermo-operating unit 2', is provided at the other end of the cylindrical portion of the fitting member 23. The locking part 23d is provided at a position that can secure the constant-distance gap and sufficiently secure the flow rate of the coolant passing through the opening 23a.

The relief mechanism unit 3' is provided with a relief rod 24 as a valve rod, and two spring receiving parts are formed stepwise on one end in the longitudinal direction of the relief rod 24. Specifically, a fourth spring receiving part 24a with an enlarged diameter is formed on the first step from the tip end. In addition, a fifth spring receiving part 24b with a reduced diameter than the fourth spring receiving part 24a is formed on the second step. A relief valve 25 that is an approximately plate-like valve body is fitted and assembled, and locked with such as an E-type retaining ring on the other end of the relief rod 24.

The relief valve 25 is elastically supported by the biasing force of the coil spring 26, which is disposed between the fifth spring receiving part 24b and the relief valve 25 so as to surround the circumference of the relief rod 24.

In the present embodiment, in a state where the locking part 23d of the fitting member 23 is in contact with the tip end of the spring receiving side of the relief rod 24, the coil spring 27 is disposed so as to surround the coil spring 26 from outside between the fourth spring receiving part 24a and the third spring receiving part 23e provided in the fitting member 23. The relief rod 24 is secured to the fitting member 23 by the biasing force of the coil spring 27. This provides a relief mechanism unit 3' with the fitting member 23 attached.

It should be noted that, in the present embodiment, the relief rod 24 is secured to the fitting member 23 by the biasing force of the coil spring 27. However, the securing method is not limited to this configuration. For example, the locking part of the fitting member 23 may be brought into contact with the tip end of the spring receiving side of the relief rod 24, and the contacting portion may be secured by welding. This provides a relief mechanism unit 3' with the fitting member 23 attached without using the coil spring 27. An elastic material, such as a leaf spring or rubber, may be used instead of the coil spring 27.

The relief mechanism unit 3' thus configured forms the first circulation passage which is opened or closed by the relief valve 25. In the present embodiment, the relief valve 25 has a configuration in which the relief valve 25 seats on the valve seat 14 by the biasing force of the coil spring 26 , which is a member of the counterpart side housing. The relief valve 25 opens or closes depending on the coolant pressure in the first circulation passage (engine) side.

In addition, in the present embodiment, the relief mechanism unit 3', in a state where the fitting member 23 is attached by engaging the hooking part 23c formed in the fitting member 23 with the second spring receiving part 21a formed in the frame 21, is attached to the frame 21 to hang down. This allows the relief mechanism unit 3' to be attached to the frame 21, creating a constant-distance gap against the thermo-element 6 of the thermo-operating unit 2' .

As shown in Fig. 4-1(d), the engaging portion between the second spring receiving part 21a and the hooking part 23c is arranged in the order of the second spring receiving part 21a, the hooking part 23c, and the coil spring 9 from the bottom. The frame 21 and the fitting member 23 are secured by the biasing force of the coil spring 9. As a result, the thermostat device 1' in which the thermo-operating unit 2' and the relief mechanism unit 3' are integrated is obtained.

In the present embodiment, as shown in Fig. 4, the relief mechanism unit 3' is configured to attach to the axial extension line of the thermo-operating unit 2' through the fitting member 23. However, this configuration is not the only possible one. As an example of a modification of the configuration, the flange-like locking part 23d to support the relief mechanism unit 3'is provided in the side wall of the fitting member 23 (the part except the opening 23a), while an independent wall surface, separate from the side wall of the fitting member 23, may be provided as a part to slidably hold the thermo-element 6. Specifically, to slidably hold the thermo-element 6, a cylindrical wall surface with an opening through which the coolant can flow may be newly provided on the inside of the side wall of the fitting member 23.

With the fitting member having such a structure, the thermo-element 6 of the thermo-operating unit 2' can be slidably held by the cylindrical wall surface provided inside the sidewall of the fitting member 23. In addition, the relief mechanism unit 3' can be decentered or inclined against the axial line of the thermo-operating unit 2', by displacing the position of the sidewall of the fitting member 23 or tilting the sidewall while keeping the position of the cylindrical wall surface, which is newly provided to slidably hold the thermo-element 6.

### Advantageous Effects

As described above, the present embodiment of the thermostat device 1' has a configuration in which a constant-distance gap is provided between the thermo-element 6 of the thermo-operating unit 2' and the relief rod 24 of the relief mechanism unit 3' by integrating the relief mechanism unit 3' and the thermo-operating unit 2' via the fitting member 23. This makes it possible to improve the coolant flow near the thermo-element 6 as opposed to the conventional techniques where the relief rod and other components are disposed around the thermo-element 6. This configuration described above improves the coolant flow around the thermo-element 6 and allows the coolant to efficiently contact the thermo-element 6, thereby improving the temperature sensitivity. Taking into account the pressure loss of the coolant and the temperature sensitivity of the thermo-element 6, the larger the gap provided by the fitting member 23, the more desirable it is.

### Third Embodiment

A third embodiment of the thermostat device will be described in detail with reference to the drawings. Note that the embodiment does not limit the invention. Elements that can be described similarly to the first and the second embodiment will have the same reference signs, and a duplicate description will be omitted. Moreover, the configuration of the cooling circuit shown in Fig. 1 can be explained by replacing thermostat device 1 by thermostat device 1" for the second embodiment. The configuration of the thermo-operating unit side is the same as that of the second embodiment.

### Thermostat Device

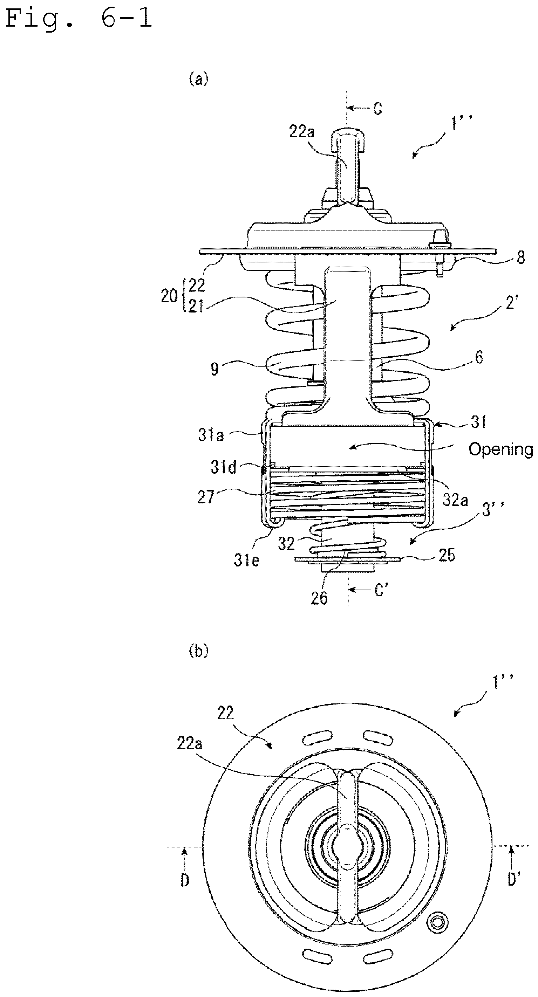

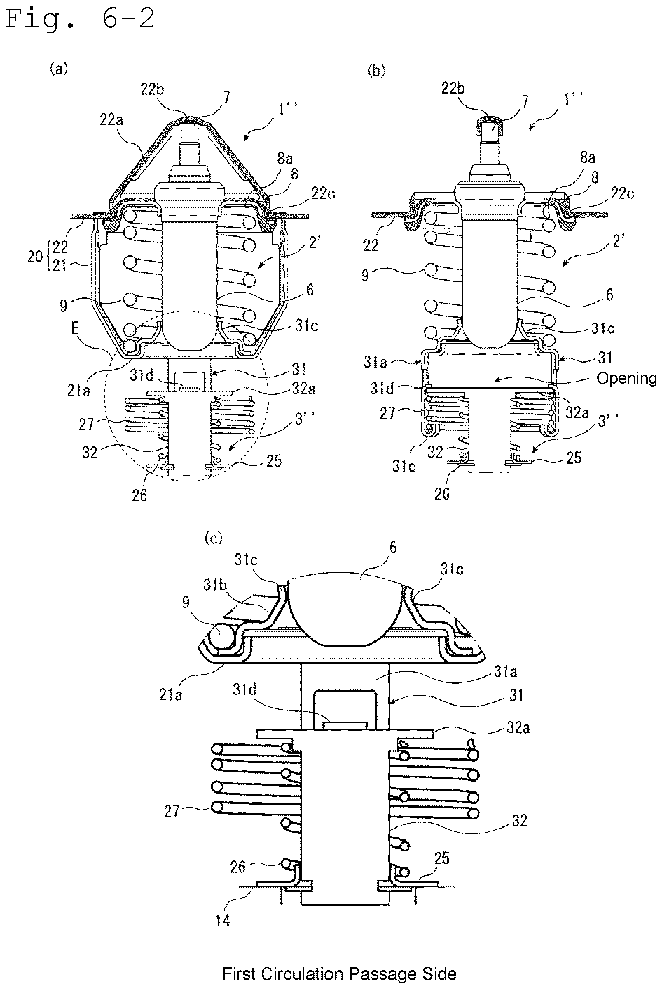

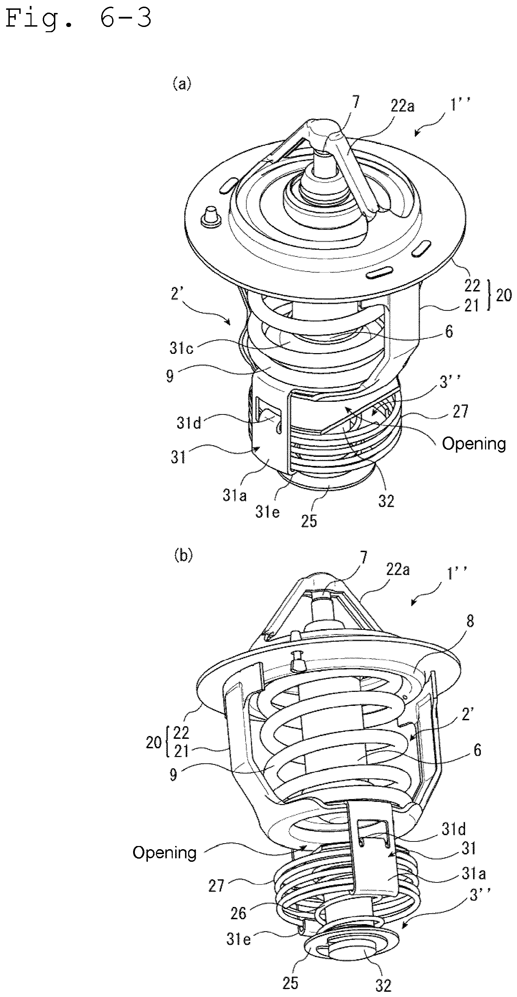

Fig. 6 (Figs. 6-1, 6-2, and 6-3) are views showing an example of the configuration of the third embodiment of the thermostat device. Fig. 6-1(a) is a front view, Fig. 6-1(b) is a plan view, Fig. 6-2(a) is a cross-sectional view at C-C', Fig. 6-2(b) is a cross-sectional view at D-D', Fig. 6-2(c) is an enlarged view of the portion E, and Figs. 6-3(a) and (b) are perspective views.

The thermostat device 1" in this embodiment, similar to the first embodiment described above, is disposed in the flow passage for the circulation of the coolant between the engine and the radiator (see the cooling circuit shown in Fig. 1) is provided with a thermo-operating unit 2' described above, and a relief mechanism unit 3'' which controls the coolant flow supplied to the engine through the first circulation passage. The thermostat device 1" is configured that the thermo-operating unit 2' is accommodated in an outer frame 20 which consists of a frame 21 and a flange 22 and additionally, the relief mechanism unit 3" is mounted on one end side of the longitudinal direction of the thermo-operating unit 2' via a fitting member 31 (see Fig. 6). In other words, the thermo-operation unit 2' and the relief mechanism unit 3'' are separate structures that are integrated into the thermostat device 1" via the fitting structure in the fitting member 31.

### Structure of the Relief Mechanism Unit Side

The structure of the relief mechanism unit 3" and the fitting member 31 of the present embodiment will be described.

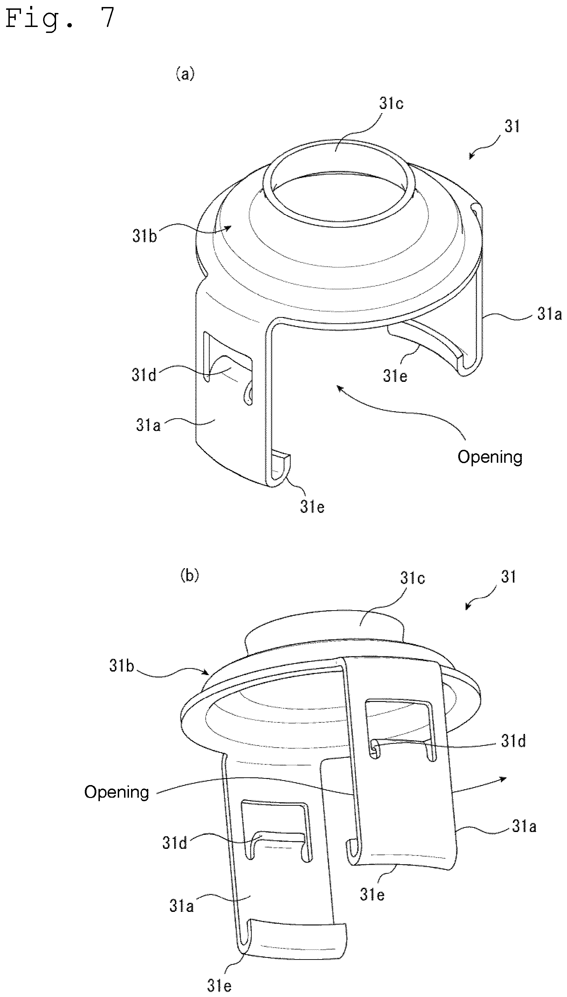

In Fig. 6, the thermostat device 1" of the present embodiment is provided with a fitting member 31 with an opening that allows the coolant to pass between the opposing arc-shaped side walls 31a. The fitting member serves can attach the relief mechanism unit 3" to the thermo-element 6 that forms one end of the longitudinal direction of the thermo-operating unit 2', with a constant-distance gap. Figs. 7(a) and 7(b) are perspective views showing an example of the structure of the fitting member 31. The fitting member 31 has a configuration in which two side walls 31a are connected via annular joining part 31b whose diameter reduces stepwise and in which the thermo-element 6, which moves downward correspondingly when the piston rod 7 of the thermo-operating unit 2' protrudes due to the thermal expansion of the thermal expansion body, is slidably supported by the inner wall of the cylindrical tip end part 31c that is formed at the center of the annular joining part 31b.

The step-like joining part 31b formed on the fitting member 31 functions as a hook that can attach the fitting member 31 so as to hang down to the second spring receiving part 21a formed on the frame 21. A flange-like locking part 31d formed of a plane perpendicular to the axial direction of the thermo-operating unit 2' is provided near the center of the inner side of the side wall 31a of the fitting member 31. Furthermore, a third spring receiving part 31e with a hook shape is provided on the end of the first circulation passage side of the fitting member 31 (the lower end side of the side wall 31a). The locking part 31d is provided at a position that can secure the constant-distance gap and sufficiently secure the flow rate of the coolant passing through the opening shown in Fig. 6-2(b).

The relief mechanism unit 3'' has a relief rod 32 serving as a valve stem, and a fourth spring receiving part 32a with a flange shape is provided at one end of the longitudinal direction of the relief rod 32. A relief valve 25 that is an approximately plate-like valve body is fitted and assembled, and locked with such as an E-type retaining ring on the other end of the relief rod 32.

The relief valve 25 is elastically supported by the biasing force of the coil spring 26, which is disposed between the fourth spring receiving part 32a and the relief valve 25 so as to surround the circumference of the relief rod 32.

In the present embodiment, in a state where the locking part 31d of the fitting member 31 is in contact with the tip end of the spring receiving side of the relief rod 32, the coil spring 27 is disposed so as to surround the coil spring 26 from outside between the fourth spring receiving part 32a (the locking part 31d) and the third spring receiving part 31e. The relief rod 32 is secured to the fitting member 31 by the biasing force of the coil spring 27. This provides a relief mechanism unit 3'' with the fitting member 31 attached.

In the present embodiment, as described above, the relief rod 32 is secured to the fitting member 31 by the biasing force of the coil spring 27. However, the method is not limited to this. For example, the locking part 31d of the fitting member 31 is brought into contact with the tip end of the spring-receiving side of the relief rod 32, and this portion may be secured by methods such as welding. This achieves the relief mechanism unit 3'' with the fitting member 31 attached without using the coil spring 27. Instead of the coil spring 27, elastic members such as rubber or a leaf spring may be used.

The relief mechanism unit 3" forms a first circulation passage which is opened and closed by the relief valve 25. In the present embodiment, it is a structure in which the relief valve 25 seats on the valve seat 14, which is a member of the counterpart side housing, and opens or closes according to the coolant pressure in the first circulation passage (engine) side.

In addition, in the present embodiment, by engaging the step-like joining part 31b formed on the fitting member 31 with the second spring receiving part 21a formed on the frame 21, the relief mechanism unit 3" to which the above-obtained fitting member 31 is attached to the frame 21 so as to hang down. With this, the relief mechanism unit 3" is attached to the frame 21 with a constant-distance gap against the thermo-element 6 of the thermo-operating unit 2'.

As shown in Fig. 6-2(c), the engaging portion between the second spring receiving part 21a and the joining part 31b is arranged in the order of the second spring receiving part 21a, the joining part 31b, and the coil spring 9 from the bottom. The frame 21 and the fitting member 31 are secured by the biasing force of the coil spring 9. As a result, the thermostat device 1" in which the thermo-operating unit 2' and the relief mechanism unit 3" are integrated is obtained.

In the present embodiment, as shown in Fig. 6, the relief mechanism unit 3" is configured to attach to the axial extension line of the thermo-operating unit 2' through the fitting member 31. However, this configuration is not the only possible one. As an example of a modification of the configuration, while keeping the mutual positional relationship between the locking part 31d of the two side walls 31a and the third spring receiving part 31e, the portion upper than the locking part 31d of the side wall 31a may be modified such that the center line of the cylinder formed by the opposing side walls 31a lies on an offset position from the extension line of the axial line of the thermo-operation unit 2'or tilted to the axial line of the thermo-operating unit 2'. With the fitting member of the configuration like this, the relief mechanism unit 3'' can be decentered or tilted with respect to the axial line of the thermo-operating unit 2'.

### Advantageous Effects

As described above, the present embodiment of the thermostat device 1" has a configuration in which a constant-distance gap is provided between the thermo-element 6 of the thermo-operating unit 2' and the relief rod 32 of the relief mechanism unit 3" by integrating the relief mechanism unit 3" and the thermo-operating unit 2' via the fitting member 31. This makes it possible to improve the coolant flow near the thermo-element 6 as opposed to the conventional techniques where the relief rod and other components are disposed around the thermo-element 6. This configuration described above improves the coolant flow around the thermo-element 6 and allows the coolant to efficiently contact the thermo-element 6, thereby improving the temperature sensitivity. Taking into account the pressure loss of the coolant and the temperature sensitivity of the thermo-element 6, the larger the gap provided by the fitting member 31, the more desirable it is.

### Reference Signs List

- 1, 1', 1'': thermostat device
- 2, 2': thermo-operating unit
- 3, 3', 3": relief mechanism unit
- 4: housing
- 4a: flow inlet
- 4b: piston receiving hole
- 4c: valve seat
- 4d: frame support
- 4e: seal member
- 5: fitting member (fitting plate)
- 5a: flat portion
- 6: thermo-element
- 7: piston rod
- 8: control valve
- 8a: first spring receiving part
- 9: coil spring
- 10: frame
- 10a: second spring receiving part
- 10b: cylindrical portion
- 10c: hooking part
- 10d: through hole
- 11: relief rod
- 12: relief valve
- 13: coil spring
- 14: valve seat
- 20: outer frame
- 21: frame
- 21a: second spring receiving part
- 22: flange
- 22a: piston locking part
- 22b: piston receiving hole
- 22c: valve seat
- 23, 31: fitting member
- 23a: opening
- 23b: brim
- 23c: hooking part
- 23d, 31d: locking part
- 23e, 31e: third spring receiving part
- 24, 32: relief rod
- 24a,32a: fourth spring receiving part
- 24b: fifth spring receiving part
- 25: relief valve
- 26, 27: coil spring
- 31a: side wall
- 31b: joining part
- 31c: tip end part

## Claims

1. A thermostat device, comprising:
a thermo-operating unit with a control valve that opens and closes a first passage, according to the coolant temperature, which is a passage for coolant that returns to an engine passing through a radiator; and
a relief mechanism unit with a relief valve that opens and closes a second passage, according to the coolant pressure, which is a passage for coolant that returns to the engine without passing through the radiator,
wherein
the thermo-operating unit includes a thermo-element with a thermal expanding body therein that expands and contracts in response to the coolant temperature, and
a fitting member is included to provide a constant-distance gap between the thermo-element of the thermo-operating unit and the relief mechanism unit, and
the thermo-operating unit and the relief mechanism unit have distinct structures, respectively, and are joined and
integrated by the fitting member.

2. The thermostat device according to claim 1,
wherein
the thermo-operating unit further includes a piston rod that extends and retracts with the expansion and contraction of the thermal expansion body and a frame provided with a cylindrical part into which the end part of the thermo-element can be slidably inserted; when the piston rod protrudes due to the thermal expansion of the thermal expansion body while the control valve is biased in the valve-closing direction, the thermo-element slides on the inner wall of the cylindrical portion and moves to the direction to open the control valve attached to the thermo-element;
in the relief mechanism unit, a relief valve is attached to one end side of the relief rod as a valve stem and opens and closes according to the coolant pressure; and
the fitting member is formed as a U-shaped plate, with both ends of the U-shaped plate attached to the frame providing the constant-distance gap, and the other end of the relief rod is fixed to the outer bottom surface of the U-shaped plate.

3. The thermostat device according to claim 1,
further comprising a frame to accommodate the thermo-operating unit,
wherein
the fitting member is provided with two openings through which the coolant passes through cylindrical side walls and
has a structure that, while in a state of being mounted to the frame, the thermo-element is slidably supported by the inner wall of the cylindrical portion;
the thermo-operating unit further includes a piston rod that extends and retracts with the expansion and contraction of the thermal expansion body; when the piston rod protrudes due to the thermal expansion of the thermal expansion body while the control valve is biased in the valve-closing direction, the thermo-element slides feely on an inner wall of the cylindrical part and moves to the direction to open the control valve attached to the thermo-element; and
in the relief mechanism unit, a relief valve is attached to one end side of the relief rod as a valve stem so as to open and close according to the coolant pressure, and the other end of the relief rod is secured to an inner surface of a side wall of the fitting member creating a constant-distance gap against the thermo-element.

4. The thermostat device according to claim 1,
further comprising a frame to accommodate the thermo-operating unit,
wherein
the fitting member is provided with an opening through which the coolant passes between the facing cylindrical side walls,
and the two side walls are connected by an annular joining part with a stepwise reduced diameter while in a state of being mounted to the frame, the thermo-element is slidably supported by the inner wall of the cylindrical tip end that is formed at the center of the annular joining part;
the thermo-operating unit further includes a piston rod that extends and retracts with the expansion and contraction of the thermal expansion body; when the piston rod protrudes due to the thermal expansion of the thermal expansion body while the control valve is biased in the valve-closing direction, the thermo-element slides on the inner wall of the tip end of the fitting member and moves to the direction to open the control valve attached to the thermo-element; and
in the relief mechanism unit, a relief valve is attached to one end side of the relief rod as a valve stem so as to open and close according to the coolant pressure, and the other end of the relief rod is secured to an inner surface of a side wall of the fitting member creating a constant-distance gap against the thermo-element.

5. The thermostat device according to claim 3 or 4, wherein the other end of the relief rod is fixed to the inside side wall of the fitting member by a biasing force due to an elastic member or welding.

6. The thermostat device according to any one of claims 2, 3, or 4, wherein
the axial line of the relief mechanism unit lies on an extension line of the axis of the thermo-operating unit, or decentered from, or tilted against the axial line of the thermo-operating unit.
